# EUROPEAN PATENT APPLICATION

(11) **EP 4 790 602 A1**
(43) Date of publication of application: **12.08.2026**
(21) Application number: 26153292.3
(22) Date of filing: 21.01.2026
(51) Int. Cl.: G06N 10/60

(54) **COMPUTER PROGRAM, INFORMATION PROCESSING METHOD, AND INFORMATION PROCESSING APPARATUS**

(30) Priority: 06.02.2025 JP 2025018326
(71) Applicant: FUJITSU LIMITED, Kawasaki-shi, Kanagawa 211-8588 (JP)
(72) Inventor: TAKAHASHI, Norihiko, Kawasaki-shi, 211-8588 (JP)
(74) Representative: Haseltine Lake Kempner LLP

(57) **Abstract**

An information processing apparatus performs, a plurality of times, an update process of updating a value of a first parameter, which is a variable included in a cost function applied to a variational quantum circuit used for variational quantum eigenvalue computation. The information processing apparatus determines a value of a second parameter representing a weight for an amount of change in the value of the first parameter in each update process, by adding a constant term and a variable term expressed using a ratio between the values of the cost function calculated through the variational quantum eigenvalue computation using the values of the first parameter obtained in the k-th and (k-1)-th update processes. The information processing apparatus performs the (k+1)-th update process using the amount of change weighted by the determined value of the second parameter.

## Description

### FIELD

The embodiments discussed herein relate to a computer program, an information processing method, and an information processing apparatus.

### BACKGROUND

As a method for performing quantum chemical calculations using a quantum computer or a simulator, there is a variational quantum eigenvalue algorithm. A variational quantum eigensolver (VQE) using this algorithm is also known. The VQE algorithm is used, for example, to obtain a ground-state energy value of a substance.

In quantum chemical calculations using the VQE algorithm, for example, a quantum computer measures an expectation value of a quantum state using a variational quantum circuit parameterized by a plurality of parameters. The value of a cost function representing energy is obtained from the expectation value of the quantum state. The parameters include the rotation angles of rotation gates which are one type of quantum gate in the variational quantum circuit. The value of the cost function represents the sum (total energy value) of energies calculated for respective qubits. Hereinafter, unless otherwise specified, the term "energy value" refers to the total energy value.

A classical computer updates the values of the parameters on the basis of the expectation value of the quantum state so that the energy decreases. The quantum computer generates the quantum state using the updated values of the parameters and measures the expectation value again. The quantum computer and the classical computer optimize the parameters by iteratively measuring the expectation value of the quantum state and updating the values of the parameters until the energy converges.

As a parameter optimization method, there is a gradient method that optimizes parameters on the basis of the gradient of a cost function obtained when the values of the parameters are changed. In addition, regarding optimization of a molecular structure, there has been proposed a method that updates, according to a loss function calculated from a coordinate parameter of a target molecule to be processed, one of the coordinate parameter and a quantum circuit parameter while fixing the other of the coordinate parameter and the quantum circuit parameter. Further, there has been proposed a method that iteratively updates a Hamiltonian parameter and a quantum circuit parameter until the energy of a target quantum system becomes a minimum value, and determines a minimum eigenstate. Still further, there has been proposed a method that efficiently handles a quantum circuit while updating parameters using both task bits and auxiliary bits as quantum bits. See, for example, the following literatures.
Japanese Laid-open Patent Publication No. 2024-43959
Japanese National Publication of International Patent Application No. 2023-549618
U.S. Patent Application Publication No. 2023/0144633
U.S. Patent Application Publication No. 2021/0011748

Conventional gradient methods may use a fixed-value parameter (also referred to as a step size or a learning rate) representing a weight for an amount of change in each execution of a process of updating the values of parameters. If this fixed-value parameter is not a suitable value, the number of iterations of the process until the energy converges increases, and the computation time for the variational quantum eigenvalue computation may increase.

### SUMMARY

In one aspect, the present application is intended to reduce the computation time for variational quantum eigenvalue computation.

In one aspect, there is provided a computer program that causes a computer to perform, a plurality of times, an update process of updating a value of a first parameter, the first parameter being a variable included in a cost function applied to a variational quantum circuit used for variational quantum eigenvalue computation, the computer program causing the computer to perform a process including: determining a value of a second parameter, the second parameter representing a weight for an amount of change in the value of the first parameter in each execution of the update process, by adding a variable term and a constant term, the variable term being expressed using a ratio between a value of the cost function calculated through the variational quantum eigenvalue computation using the value of the first parameter obtained in a k-th execution of the update process and a value of the cost function calculated through the variational quantum eigenvalue computation using the value of the first parameter obtained in a (k-1)-th execution of the update process, k being a natural number; and performing a (k+1)-th execution of the update process using the amount of change weighted by the determined value of the second parameter.

### BRIEF DESCRIPTION OF DRAWINGS

FIG. 1 illustrates an example of an information processing method according to a first embodiment;
FIG. 2 illustrates an example of a system configuration according to a second embodiment;
FIG. 3 illustrates an example of hardware of a classical computer;
FIG. 4 is a block diagram illustrating an example of functions of the classical computer for VQE computation;
FIG. 5 illustrates an example of a variational quantum circuit;
FIG. 6 is a flowchart illustrating an example procedure for a VQE computation process;
FIGS. 7A and 7B illustrate examples of VQE computation for the energy of a hydrogen molecule;
FIG. 8 illustrates an example of how a step size changes during the VQE computation for the energy of the hydrogen molecule;
FIGS. 9A and 9B illustrate examples of the VQE computation for the energy of a benzene molecule;
FIG. 10 illustrates an example of how the step size changes during the VQE computation for the energy of the benzene molecule; and
FIG. 11 is a flowchart illustrating an example procedure for a VQE computation process including a process of changing a reference value η₀.

### DESCRIPTION OF EMBODIMENTS

Hereinafter, embodiments will be described with reference to the drawings. A plurality of embodiments may be combined unless they exclude each other.

### [First Embodiment]

A first embodiment relates to an information processing method for reducing the number of iterations of a process by accelerating the convergence of energy in a variational quantum eigenvalue computation, thereby reducing the computation time.

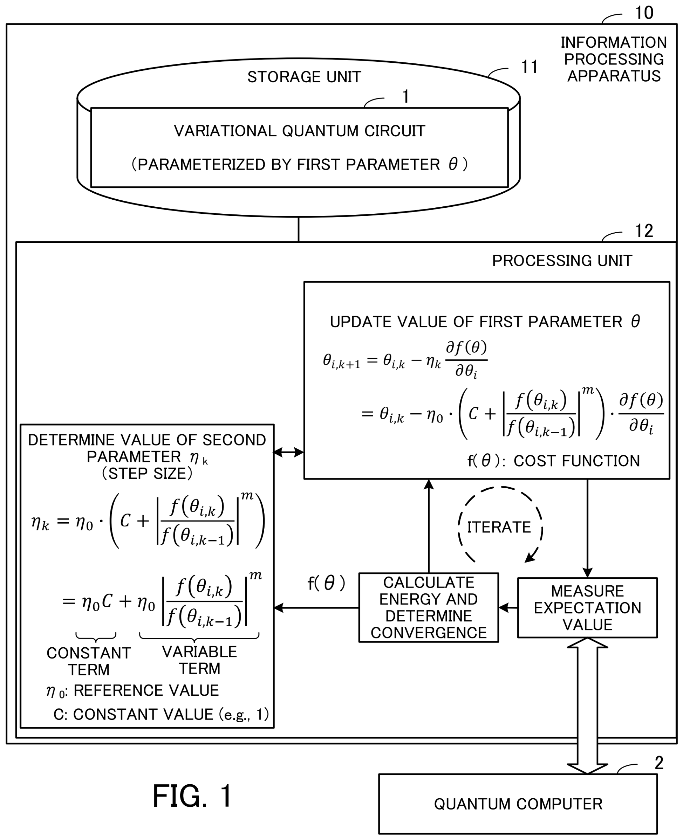

FIG. 1 illustrates an example of an information processing method according to the first embodiment. FIG. 1 illustrates an information processing apparatus 10 that performs the information processing method. The information processing apparatus 10 is able to implement the information processing method by executing, for example, an information processing program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a variational quantum circuit 1 corresponding to a quantum many-body system that is a target to be solved in the variational quantum eigenvalue computation. The variational quantum circuit 1 is parameterized by a first parameter θ, which is a variable included in a cost function f(θ). The first parameter θ includes, for example, a set of a plurality of parameters (θ₁, θ₂, ...). The cost function f (θ) represents the energy of the quantum many-body system.

The processing unit 12 performs the variational quantum eigenvalue computation. In the variational quantum eigenvalue computation, the processing unit 12 uses, for example, a quantum computer 2 to measure an expectation value of a quantum state using the variational quantum circuit 1 to which the value of the first parameter θ is applied. The processing unit 12 calculates the energy of the quantum many-body system based on the expectation value of the quantum state. The processing unit 12 determines based on the calculated energy whether the energy has converged. The processing unit 12 determines that the energy has converged, when a predetermined convergence condition is satisfied. If it is determined that the energy has not converged, the processing unit 12 updates the value of the first parameter θ in a direction that decreases the energy. Such updating of the value of the first parameter θ is referred to as parameter optimization. The processing unit 12 iteratively performs, a plurality of times, the expectation value measurement using the quantum computer 2 and the parameter optimization until the energy satisfies the convergence condition.

Instead of using the quantum computer 2, the processing unit 12 may use a simulator to measure the expectation value of the quantum state using the variational quantum circuit 1 to which the value of the first parameter θ is applied.

In the (k+1)-th update process (k is a natural number) of the first parameter θ by a gradient method, the value of θᵢ included in the first parameter θ is updated according to, for example, the following Equation (1). ${θ}_{i , k + 1} = {θ}_{i , k} - η \frac{\partial f \left(θ\right)}{\partial {θ}_{i}}$

In Equation (1), θ_{i,k+1} represents θᵢ obtained in the (k+1)-th update process. θ_{i,k} represents θᵢ obtained in the k-th update process. η is a second parameter representing a weight for the amount of change in the value of the first parameter θ in each update process. η may also be regarded as a parameter representing the degree of changing the value of the first parameter θ. Note that η may be referred to as a step size or a learning rate in the gradient method. ∂f(θ)/∂θᵢ is a partial differential coefficient representing the gradient of f(θ) with respect to a change in the value of the parameter θᵢ. More specifically, ∂f(θ)/∂θᵢ represents the gradient of the parameter θᵢ in the axial direction, and is a partial differential coefficient with respect to the parameter θᵢ at the point (θ_{1,k}, θ_{2,k}, ...) of f(θ).

In the case where η is a fixed value, the following problem may occur. For example, in the initial stage of the optimization of the first parameter θ, if the value of η is too large, the value of the first parameter θ may change excessively in a single update process. In this case, the optimization may fail due to a deviation from an optimization path that is supposed to be followed. In addition, if the value of η is too small particularly in the final stage of the optimization, the amount of change in the value of the first parameter θ may be underestimated, and the number of iterations of the update process until the convergence condition is satisfied may increase. As a result, the time for the variational quantum eigenvalue computation increases.

To avoid this, in the information processing method according to the first embodiment, the processing unit 12 uses, as the second parameter, nₖ, which is the sum of a constant term and a variable term as described below, instead of the fixed value η. ηₖ is the second parameter used in the (k+1)-th update process of the first parameter θ. The processing unit 12 determines the value of ηₖ by adding the constant term and the variable term expressed using a ratio between f(θ_{i,k}) and f(θ_{i,k-1}).

f(θ_{i,k}) is the value of the cost function calculated in the variational quantum eigenvalue computation using the value of θ_{i,k} obtained in the k-th update process. f(θ_{i,k-1}) is the value of the cost function calculated in the variational quantum eigenvalue computation using the value of θ_{i,k-1} obtained in the (k-1)-th update process.

For example, the second parameter ηₖ is determined according to the following Equation (2). $\begin{matrix}{η}_{k} = {η}_{0} ⋅ \left(C+{\left|\frac{f \left({θ}_{i , k}\right)}{f \left({θ}_{i , k - 1}\right)}\right|}^{m}\right) \\ = {η}_{0} C + {η}_{0} {\left|\frac{f \left({θ}_{i , k}\right)}{f \left({θ}_{i , k - 1}\right)}\right|}^{m}\end{matrix}$

In Equation (2), η₀ is a reference value of the second parameter nₖ, and C is a predetermined constant value (for example, 1). In the second line of Equation (2), the first term on the right-hand side is a constant term, and the second term on the right-hand side is a variable term. The constant term is the product of the reference value η₀ and the predetermined constant value C. The variable term is the product of the reference value η₀ and the power of the absolute value of the ratio of f(θ_{i,k}) to f(θ_{i,k-1}).

In addition, Equation (2) includes a third parameter m, which is the exponent, and the value of the third parameter m is appropriately set so that the number of iterations of the update process until the convergence condition is satisfied is reduced.

For example, in Equation (2), in the case where |f(θ_{i,k})/f(θ_{i,k-1})| > 1 and m > 0 or in the case where |f(θ_{i,k})/f(θ_{i,k-1})| < 1 and m < 0, the value of |f(θ_{i,k})/f(θ_{i,k-1})|^{m} increases as the absolute value of the third parameter m increases. If the absolute value of the third parameter m becomes excessively large, the value of |f(θ_{i,k})/f(θ_{i,k-1})|^{m} also increases excessively. As a result, the value of the second parameter ηₖ also increases excessively. This causes the value of the first parameter θ to change too much, and the energy may fail to converge (the computation fails).

On the other hand, in Equation (2), in the case where |f(θ_{i,k})/f(θ_{i,k-1})| > 1 and m < 0 or in the case where |f(θ_{i,k})/f(θ_{i,k-1})| < 1 and m > 0, the value of |f(θ_{i,k})/f(θ_{i,k-1})|^{m} decreases as the absolute value of the third parameter m increases. If the absolute value of the third parameter m becomes excessively large, the value of |f(θ_{i,k})/f(θ_{i,k-1})|^{m} decreases excessively. As a result, the value of the second parameter ηₖ also decreases. This decreases a change in the value of the first parameter θ. However, the constant term in the second parameter ηₖ prevents the value of the second parameter ηₖ from becoming too small. In view of the above, a suitable value is determined for the third parameter m.

In Equation (2), the value of ηₖ increases as f(θ_{i,k})/f(θ_{i,k-1}), which is the ratio of f (θ_{i,k}) to f (θ_{i,k-1}), increases. The smaller f(θ_{i,k})/f(θ_{i,k-1})is, the smaller the value of ηₖ is. However, in the case where ηₖ does not include the constant term (η₀C), that is, in the case where ηₖ is expressed by Equation (3), the following problem may occur. ${η}_{k} = {η}_{0} {\left|\frac{f \left({θ}_{i , k}\right)}{f \left({θ}_{i , k - 1}\right)}\right|}^{m}$

In the case of ηₖ determined by Equation (3), if f(θ_{i,k}) is very small compared to f(θ_{i,k-1}), both |f(θ_{i,k})/f(θ_{i,k-1})|^{m} and ηₖ take very small values. In this case, the value of θ_{i,k} remains almost unchanged, which prevents the optimization of the value of the first parameter θ from progressing.

By contrast, ηₖ determined by Equation (2) includes the constant term. Therefore, even when |f(θ_{i,k})/f(θ_{i,k-1})|^{m} takes a very small value, ηₖ ≈ η₀C is secured as ηₖ. Accordingly, this prevents a situation where the value of θ_{i,k} remains almost unchanged.

In the update process iteratively performed during the variational quantum eigenvalue computation, the processing unit 12 updates the value of the first parameter θ with an amount of change weighted by the value of the second parameter ηₖ determined as described above.

In the (k+1)-th update process, the processing unit 12 updates θ according to, for example, the following Equation (4). ${θ}_{i , k + 1} = {θ}_{i , k} - {η}_{0} ⋅ \left(C+{\left|\frac{f \left({θ}_{i , k}\right)}{f \left({θ}_{i , k - 1}\right)}\right|}^{m}\right) ⋅ \frac{\partial f \left(θ\right)}{\partial {θ}_{i}}$

Unlike Equation (1), Equation (4) uses ηₖ, which is the second parameter determined using the sum of the constant term (η₀C) and the variable term (η₀|f(θ_{i,k})/f(θ_{i,k-1})|^{m}). The processing unit 12 determines the value of the updated parameter θ_{i,k+1} by subtracting the product of ηₖ and ∂f(θ)/∂θᵢ from the parameter θ_{i,k} obtained in the k-th update process.

As described above, the processing unit 12 determines the value of ηₖ by adding the constant term and the variable term expressed using the ratio between the current (k-th) f(θ_{i,k}) and the previous ((k-1)-th) f(θ_{i,k-1}). Then, the processing unit 12 performs the (k+1)-th update process using an amount of change weighted by the determined value of ηₖ, thereby updating the value of the first parameter θ.

Since ηₖ includes the variable term (η₀|f(θ_{i,k})/f(θ_{i,k-1})|^{m}), a change in the value of the cost function obtained during the variational quantum eigenvalue computation is reflected in the value of ηₖ. In the initial stage where the optimization of the first parameter θ does not progress much (i.e., the value of k is small), the magnitude relationship between f(θ_{i,k}) and f(θ_{i,k-1}) is not determined, and the difference between these values tends to be large. In the case where f(θ_{i,k}) and f(θ_{i,k-1})exhibit such a tendency, the value of ηₖ determined using the ratio between f (θ_{i,k}) and f (θ_{i,k-1})also exhibits a tendency to increase or decrease greatly.

In addition, the value of the first parameter θ, whose amount of change is weighted by ηₖ, and the value (energy) of the cost function f(θ) also tend to increase or decrease with a large amount of change. Such behavior corresponds to roughly but quickly searching a wide region of the search space. Further, ηₖ includes the constant term (n₀C) as described above. Therefore, even when |f(θ_{i,k})/f(θ_{i,k-1})|^{m} takes a very small value, ηₖ ≈ η₀C is secured as ηₖ. Accordingly, this prevents a situation where the value of θ_{i,k} remains unchanged.

Thus, depending on the quantum many-body system to be solved, the optimization may progress along an optimization path toward lower energy at an earlier stage than in the case of using either the second parameter η that is a fixed value or ηₖ determined by Equation (3). Consequently, the convergence of the energy is likely to be accelerated. As a result, the number of iterations of the process for optimizing the value of the first parameter θ is reduced, and thus the computation time is expected to be reduced.

As will be described in the following second embodiment, the above effect of reducing the computation time is confirmed, for example, in the case where the value of the first parameter θ is optimized so that the energy of a hydrogen molecule (H₂) or a benzene molecule (C₆H₂) decreases. It is highly beneficial in the field of quantum chemical calculations to achieve such a reduction in the computation time at least for these molecules.

### [Second Embodiment]

The second embodiment is intended to reduce the computation time for variational quantum eigenvalue computation by accelerating the convergence of the energy in the variational quantum eigenvalue computation using a quantum computer. In the second embodiment, the variational quantum eigenvalue is computed using VQE. In the second embodiment, a process of updating the values of a set of parameters θ (corresponding to the first parameter θ in the first embodiment) so as to decrease the energy of the quantum many-body system is referred to as an optimization process. In addition, a parameter (corresponding to the second parameter ηₖ in the first embodiment) representing a weight for the amount of change in the values of the set of parameters θ in each optimization process is referred to as a step size ηₖ.

### (System Configuration and Hardware Example)

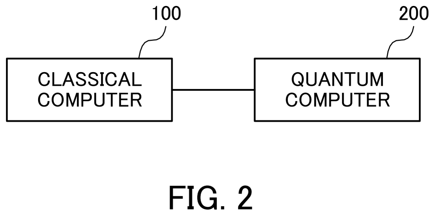

FIG. 2 illustrates an example of a system configuration according to the second embodiment. A classical computer 100 and a quantum computer 200 are connected via a network. The classical computer 100 is a von Neumann computer. The classical computer 100 performs processing such as parameter optimization computation in VQE computation. The quantum computer 200 is a quantum gate-based quantum computer that performs requested computations by manipulating the states of qubits according to a quantum circuit. In the VQE computation, the quantum computer 200 obtains an expectation value of the quantum state represented by a variational quantum circuit, by executing the variational quantum circuit with specified parameter values.

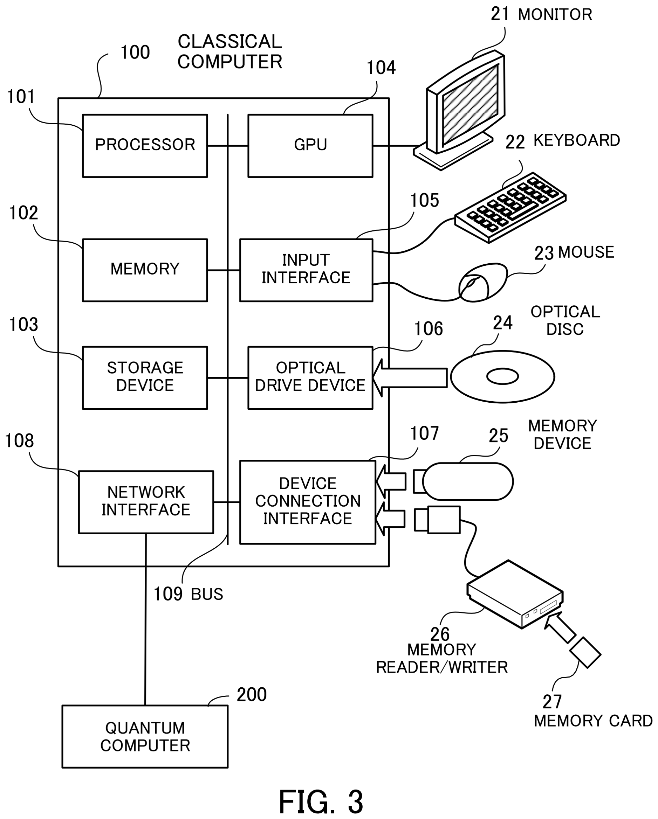

FIG. 3 illustrates an example of hardware of a classical computer. The classical computer 100 is entirely controlled by a processor 101. A memory 102 and a plurality of peripheral devices are connected to the processor 101 via a bus 109. The processor 101 is, for example, a central processing unit (CPU), a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The processor 101 may include a plurality of processor cores. The classical computer 100 may include a plurality of processors. Different processors may perform different processes among a plurality of processes performed by the classical computer 100. A set of a plurality of processors (multiprocessor) may be referred to as a "processor". The processor may be referred to as processor circuitry.

The memory 102 is used as a main storage device of the classical computer 100. The memory 102 temporarily stores at least part of operating system (OS) programs and application programs to be executed by the processor 101. The memory 102 also stores various data that is used by the processor 101 during its operation. As the memory 102, for example, a volatile semiconductor memory device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing, and is also called a graphic controller. A monitor 21 is connected to the GPU 104. The GPU 104 displays images on the screen of the monitor 21 in accordance with instructions from the processor 101. Examples of the monitor 21 include a display device using organic electro luminescence (EL) and a liquid crystal display device.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or the like.

The device connection interface 107 is a communication interface for connecting peripheral devices to the classical computer 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108 is connected to the quantum computer 200 via a network. The network interface 108 transmits information such as a request for quantum computation to the quantum computer 200, and receives information indicating a computation result from the quantum computer 200. The network interface 108 is a wired communication interface connected to a wired communication device such as a switch or a router via a cable.

The classical computer 100 is able to implement the processing functions of the second embodiment with the hardware as described above. The apparatus described in the first embodiment may also be implemented with hardware similar to that of the classical computer 100 illustrated in FIG. 3.

The classical computer 100 implements the processing functions of the second embodiment by executing a program recorded on a computer-readable recording medium, for example. The program describing the processing contents to be executed by the classical computer 100 may be recorded on various recording media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 24, the memory device 25, or the memory card 27. The program stored on the portable recording medium becomes executable after being installed in the storage device 103 under the control of the processor 101, for example. Alternatively, the processor 101 may execute the program while reading the program directly from the portable recording medium.

In such a system, the classical computer 100 and the quantum computer 200 perform VQE computation in cooperation with each other.

### (Example of Functional Blocks)

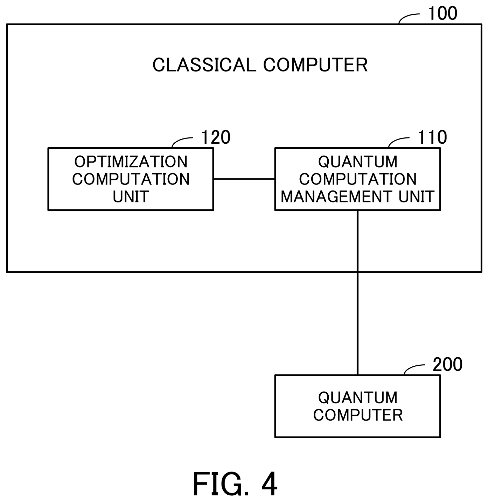

FIG. 4 is a block diagram illustrating an example of functions of the classical computer for VQE computation. The classical computer 100 includes a quantum computation management unit 110 and an optimization computation unit 120.

The quantum computation management unit 110 generates a variational quantum circuit for computing the energy of a quantum many-body system such as a molecule, and instructs the quantum computer 200 to measure an expectation value of the quantum state based on the variational quantum circuit. For example, the quantum computation management unit 110 generates a variational quantum circuit for quantum chemical computation and sets a set of parameters θ corresponding to the gate operations of the quantum gates included in the variational quantum circuit. Before the first execution of the energy computation based on the variational quantum circuit, the quantum computation management unit 110 sets initial values for the set of parameters θ. The initial value of each parameter included in the set of parameters θ is, for example, a value specified in advance by the user. A random value may be used as the initial value of each parameter.

The quantum computation management unit 110 acquires, from the quantum computer 200, the measurement result of the expectation value of the quantum state obtained based on the variational quantum circuit parameterized by the set of parameters θ. The quantum computation management unit 110 calculates the energy based on the measurement result of the expectation value. Then, the quantum computation management unit 110 determines whether the energy has converged. If it is determined that the energy has not converged, the quantum computation management unit 110 instructs the optimization computation unit 120 to optimize the set of parameters θ.

The optimization computation unit 120 optimizes the set of parameters θ in each execution of the optimization process. For example, the optimization computation unit 120 determines ηₖ according to Equation (2). Then, the optimization computation unit 120 updates the values of the set of parameters θ according to Equation (4) using the determined ηₖ. When the optimization computation is completed, the optimization computation unit 120 notifies the quantum computation management unit 110 of the updated values of the set of parameters θ.

The functions of the elements illustrated in FIG. 4 may be implemented by causing a computer to execute program modules corresponding to the elements, for example.

### (Example of Variational Quantum Circuit)

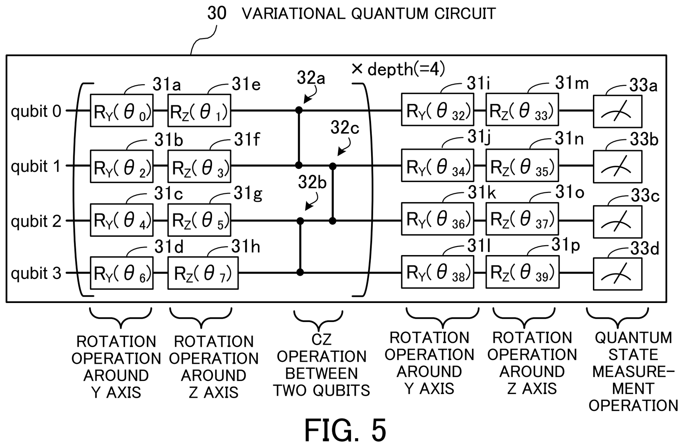

FIG. 5 illustrates an example of a variational quantum circuit. The example illustrated in FIG. 5 is a variational quantum circuit 30 that measures an expectation value of the quantum state of a hydrogen molecule. The variational quantum circuit 30 includes a plurality of quantum gates that perform gate operations on four qubits 0 to 3. On each horizontal line corresponding to the qubits, quantum gates that perform gate operations on the corresponding qubit are illustrated. When the quantum computer 200 performs quantum computation, the gate operations set for each qubit are performed in order from the left.

Single-qubit gates 31a to 31d are quantum gates that each perform a rotation operation around the Y axis of the Bloch sphere by a specified angle. By the single-qubit gates 31a to 31d, the rotation operations are performed on the qubit 0 by a rotation angle of θ₀, on the qubit 1 by a rotation angle of θ₂, on the qubit 2 by a rotation angle of θ₄, and on the qubit 3 by a rotation angle of θ₆.

Single-qubit gates 31e to 31h are quantum gates that each perform a rotation operation around the Z axis of the Bloch sphere by a specified angle. By the single-qubit gates 31e to 31h, the rotation operations are performed on the qubit 0 by a rotation angle of θ₁, on the qubit 1 by a rotation angle of θ₃, on the qubit 2 by a rotation angle of θ₅, and on the qubit 3 by a rotation angle of θ₇.

Two-qubit gates 32a to 32c are controlled-Z (CZ) gates that each perform an operation (CZ operation) that inverts the sign of a state when both a first qubit (control bit) and a second bit (target bit) of two qubits are "1". The two-qubit gate 32a performs the CZ operation between the qubit 0 and the qubit 1. The two-qubit gate 32b performs the CZ operation between the qubit 2 and the qubit 3. The two-qubit gate 32c performs the CZ operation between the qubit 1 and the qubit 2.

The gate operations performed by the single-qubit gates 31a to 31h and the two-qubit gates 32a to 32c as described above are repeated four times (that is, the depth (circuit depth) = 4). In the second to fourth repetitions of the rotation operations, rotation angles θ₈ to θ₃₁ are used.

Thereafter, the gate operations by single-qubit gates 31i to 31p are applied again. The single-qubit gates 31i to 31l are quantum gates that each perform a rotation operation around the Y axis of the Bloch sphere by a specified angle. By the single-qubit gates 31i to 31l, the rotation operations are performed on the qubit 0 by a rotation angle of θ₃₂, on the qubit 1 by a rotation angle of θ₃₄, on the qubit 2 by a rotation angle of θ₃₆, and on the qubit 3 by a rotation angle of θ₃₈. The single-qubit gates 31m to 31p are quantum gates that each perform a rotation operation around the Z axis of the Bloch sphere by a specified angle. By the single-qubit gates 31m to 31p, the rotation operations are performed on the qubit 0 by a rotation angle of θ₃₃, on the qubit 1 by a rotation angle of θ₃₅, on the qubit 2 by a rotation angle of θ₃₇, and on the qubit 3 by a rotation angle of θ₃₉.

Thereafter, the quantum state of each qubit is measured. The quantum state measurement operations are indicated by symbols 33a to 33d at the right end of the lines corresponding to the respective qubits.

In VQE computation, for example, the above-described variational quantum circuit 30 is used to determine the ground-state energy of the hydrogen molecule.

### (Example Procedure for VQE computation Process)

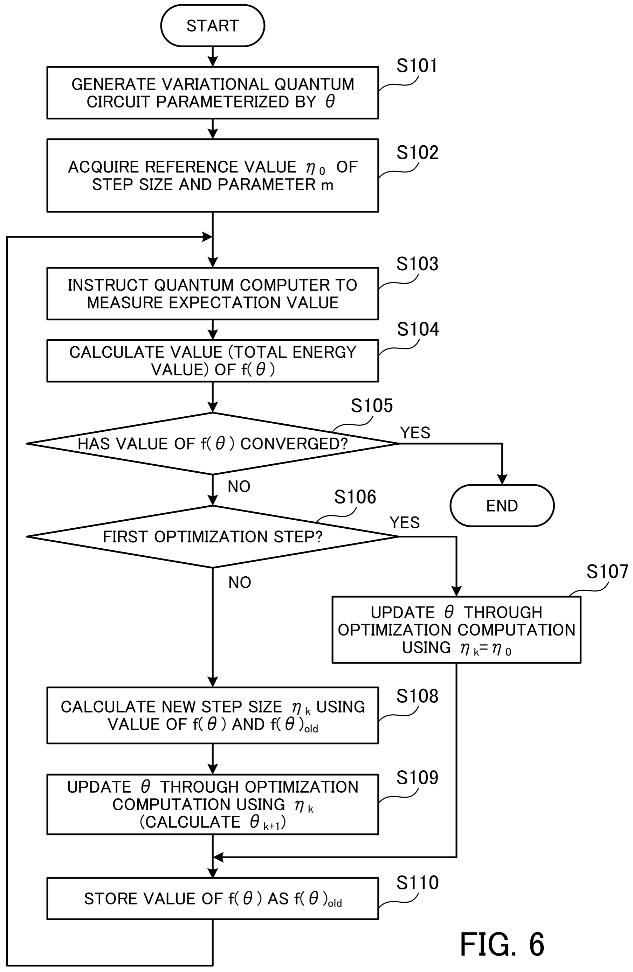

FIG. 6 is a flowchart illustrating an example procedure for a VQE computation process. Hereinafter, the process illustrated in FIG. 6 will be described in order of step numbers.

[Step S101] The quantum computation management unit 110 generates a variational quantum circuit parameterized by a set of a plurality of parameters θ. As the initial values of the set of parameters θ, the quantum computation management unit 110 uses, for example, values specified in advance.

[Step S102] The quantum computation management unit 110 acquires a reference value η₀ of the step size ηₛ used in parameter optimization, as the initial value of the step size ηₛ. Further, the quantum computation management unit 110 acquires the value of the third parameter m (hereinafter, simply referred to as the parameter m), which is the exponent in Equation (2). For example, the quantum computation management unit 110 receives user input specifying the reference value η₀ and the value of the parameter m. The quantum computation management unit 110 transmits the acquired reference value η₀ and the acquired value of the parameter m to the optimization computation unit 120. The optimization computation unit 120 stores the received reference value η₀ and the received value of the parameter m.

[Step S103] The quantum computation management unit 110 instructs the quantum computer 200 to measure an expectation value. For example, the quantum computation management unit 110 transmits the generated variational quantum circuit and the values of the set of parameters θ to the quantum computer 200, and instructs the quantum computer 200 to compute the expectation value of the quantum state (the value of each qubit) based on the variational quantum circuit. The quantum computer 200 measures the expectation value of the quantum state based on the variational quantum circuit parameterized by the set of parameters θ.

[Step S104] The quantum computation management unit 110 calculates the value (corresponding to the total energy value) of the cost function f(θ) from the expectation value of the quantum state.

[Step S105] The quantum computation management unit 110 determines whether the value of the cost function f(θ) has converged. If the value of the cost function f(θ) satisfies a predetermined convergence condition, the quantum computation management unit 110 determines that the value of the cost function f(θ) has converged. For example, the quantum computation management unit 110 determines that the value of the cost function f (θ) has converged, if the value of the cost function f(θ) has reached a value known as the ground-state energy. Alternatively, the quantum computation management unit 110 may determine that the value of the cost function f(θ) has converged, if the difference between the value of the cost function f(θ) calculated this time and the value (f(θ)_{old}) of the cost function f(θ) calculated last time is less than or equal to a predetermined threshold.

If the quantum computation management unit 110 determines that the value of the cost function f(θ) has converged, the quantum computation management unit 110 outputs a solution corresponding to the quantum state at that time, and completes the VQE computation process. If the quantum computation management unit 110 determines that the value of the cost function f(θ) has not converged, the process proceeds to step S106.

[Step S106] The quantum computation management unit 110 determines whether the current optimization process is being performed for the first time (first optimization step). If the quantum computation management unit 110 determines that it is the first optimization step, the process proceeds to step S107. If the quantum computation management unit 110 determines that it is not the first optimization step, the process proceeds to step S108.

[Step S107] The optimization computation unit 120 updates the values of the set of parameters θ by performing the calculation (optimization computation) expressed by in Equation (4) using the reference value η₀ as the step size ηₖ. Thereafter, step S110 is executed.

[Step S108] The optimization computation unit 120 calculates a new value of the step size ηₖ according to Equation (2) using the value of the cost function f(θ) and f(θ)_{old}. The value of the cost function f (θ) corresponds to f(θ_{i,k}) in Equation (2), and f(θ)_{old} corresponds to f(θ_{i,k-1}) in Equation (2).

[Step S109] The optimization computation unit 120 updates the values of the set of parameters θ by performing the calculation (optimization computation) expressed by Equation (4) using the step size ηₖ calculated in step S108. Thereafter, step S110 is executed.

[Step S110] The quantum computation management unit 110 stores the value of f(θ) as f(θ)_{old} in the memory 102. Thereafter, step S103 and its subsequent steps are repeated.

By performing the above VQE computation process, the classical computer 100 reflects a change in the value of f(θ) obtained during the VQE computation on the value of the step size ηₖ. In the initial stage where the optimization has not progressed, the magnitude relationship between f(θ) and f(θ)_{old} is not determined, and the difference between these values tends to be large. In the case where f(θ) and f(θ)_{old} exhibit such a tendency, the value of the step size ηₖ, which is determined based on the ratio of f(θ) to f(θ)_{old} (f(θ_{i,k})/f(θ_{i,k-1}) in Equation (2)), also exhibits a tendency to increase or decrease greatly. Accordingly, the values of the set of parameters θ, whose amounts of change are weighted by the step size ηₖ, and the value (energy) of f(θ) also tend to increase or decrease with a large amount of change.

Further, the step size ηₖ includes the constant term (n₀C). Therefore, even when the variable term (|f(θ_{i,k})/f(θ_{i,k-1})|^{m}) takes a very small value, ηₖ ≈ η₀C is secured as the step size ηₖ. Accordingly, this prevents a situation where the value of θ_{i,k} remains unchanged.

Thus, depending on the quantum many-body system to be solved, the optimization may progress along an optimization path toward lower energy at an earlier stage than in the case of using the step size η that is a fixed value. Consequently, the convergence of the energy is likely to be accelerated. As a result, the number of iterations of the process for optimizing the set of parameters θ is reduced, and thus the computation time is expected to be reduced.

Note that the procedure for the VQE computation process illustrated in FIG. 6 is merely an example, and the order of the processing steps may be changed as appropriate.

### (Application Example of VQE computation)

The following describes examples in which the VQE computation is performed to obtain the energy of a hydrogen molecule and the energy of a benzene molecule according to the procedure illustrated in FIG. 6. In the following application examples, the value of the predetermined constant C included in Equation (2) is set to 1.

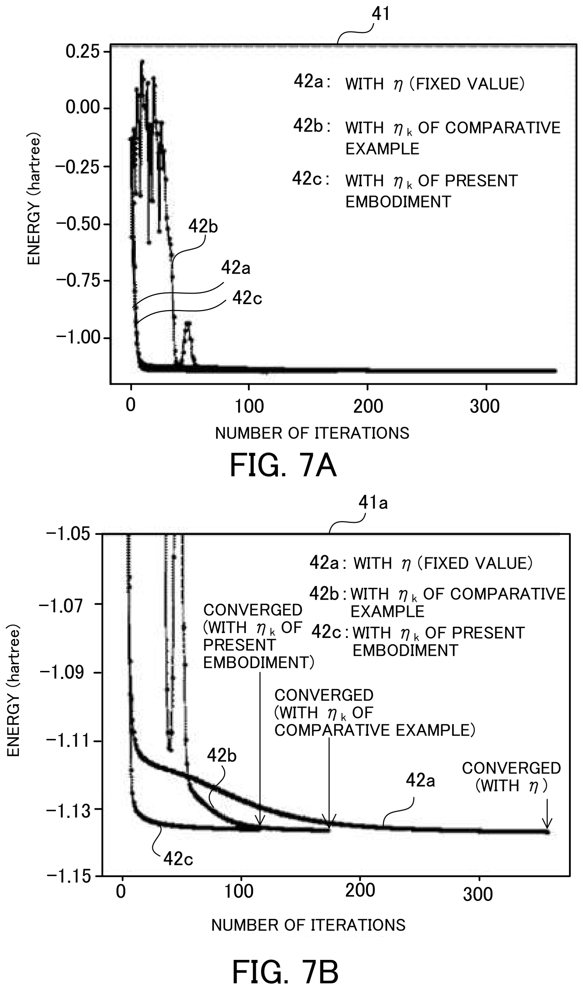

FIGS. 7A and 7B illustrate examples of the VQE computation for the energy of a hydrogen molecule. In FIG. 7A, a graph 41 represents the result of computing the energy of the hydrogen molecule using VQE in the case where the interatomic distance is 0.74 Å. In FIG. 7B, a graph 41a is an enlarged view of the graph 41, in which the energy is in the range of -1.15 to -1.05 hartree. In the graphs 41 and 41a, the horizontal axis represents the number of iterations of the optimization process, and the vertical axis represents the energy (unit: hartree). To obtain the energy of the hydrogen molecule in the VQE computation, the variational quantum circuit 30 illustrated in FIG. 5 was used, which measures an expectation value of the quantum state of the hydrogen molecule.

A polygonal line 42a represents a change in the energy in the case where the step size η of a fixed value is applied. A polygonal line 42b represents a change in the energy in the case where the step size ηₖ of a comparative example, which varies according to Equation (3), is applied. A polygonal line 42c represents a change in the energy in the case where the step size ηₖ of the present embodiment, which varies according to Equation (2), is applied.

In the computation examples of FIGS. 7A and 7B, the values of the parameter m in Equations (2) and (3) are set to 3.0. The fixed value of the step size η and the initial values of the step size ηₖ in the comparative example and the present embodiment are all set to the reference value η₀.

In the case where the step size η of the fixed value is used, the energy first decreases greatly and then continues to decrease gradually, as represented by the polygonal line 42a. On the other hand, in the case where the step size ηₖ of the comparative example is applied, the energy repeatedly increases and decreases with a large amount of change when the number of iterations is small (for example, 50 times or less) as represented by the polygonal line 42b. However, in the case where the step size ηₖ of the comparative example is applied, the convergence condition is satisfied early and the computation is thus completed early, compared to the case where the step size η of the fixed value is applied. In the examples of FIGS. 7A and 7B, the number of iterations until the convergence condition is satisfied is 359 in the case where the step size η is applied, whereas the number of iterations until the convergence condition is satisfied is 174 in the case where the step size ηₖ of the comparative example is applied. That is, applying the step size ηₖ of the comparative example reduces the computation time by a reduction rate of approximately 52% compared to applying the step size η.

In addition, in the computation examples of FIGS. 7A and 7B, in the case where the case where the step size ηₖ of the present embodiment is applied, the energy first decreases greatly as represented by the polygonal line 42c. In the case where the step size ηₖ of the present embodiment is applied, the convergence condition is satisfied early and the computation is completed early, compared to the case where the step size η of the fixed value is applied and the case where the step size ηₖ of the comparative example is applied. In the examples of FIGS. 7A and 7B, the number of iterations until the convergence condition is satisfied is 116 in the case where the step size ηₖ of the present embodiment is applied. That is, applying the step size ηₖ of the present embodiment reduces the computation time by a reduction rate of approximately 68% compared to applying the step size η of the fixed value. In addition, applying the step size ηₖ of the present embodiment reduces the computation time by a reduction rate of approximately 16% compared to applying the step size ηₖ of the comparative example.

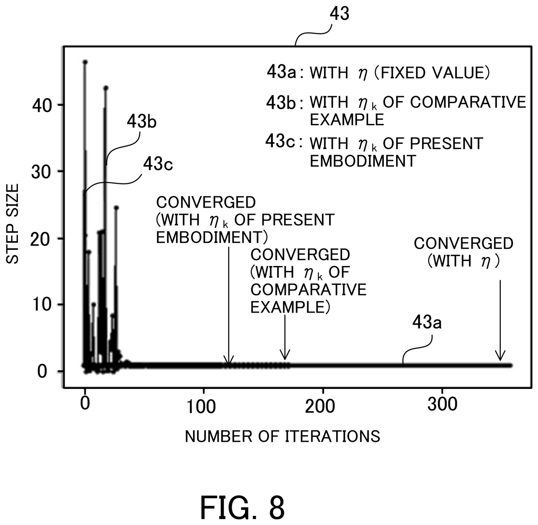

FIG. 8 illustrates examples of how the step size changes during the VQE computation for the energy of the hydrogen molecule. In a graph 43 illustrated in FIG. 8, the horizontal axis represents the number of iterations of the optimization process, and the vertical axis represents the value of the step size. A straight line 43a indicates the step size η of the fixed value (= η₀). A polygonal line 43b indicates a change in the step size ηₖ of the comparative example. A polygonal line 43c indicates a change in the step size ηₖ of the present embodiment.

As represented by the polygonal line 43b, in the initial stage where the optimization has not progressed (i.e., the number of iterations is small), the step size ηₖ of the comparative example repeatedly increases and decreases with a large amount of change. As the optimization progresses, the value of the step size ηₖ of the comparative example becomes substantially equal to the fixed value of the step size η.

The value (polygonal line 43c) of the step size ηₖ of the present embodiment greatly changes in the initial stage, and then changes with a smaller amount of change than the step size ηₖ of the comparative example. The value of the step size ηₖ of the present embodiment converges earlier than the value of the step size ηₖ of the comparative example.

The following describes an example of the VQE computation for the energy of a benzene molecule. To obtain the energy of the benzene molecule in the VQE computation, a variational quantum circuit (not illustrated) was used, which measures an expectation value of the quantum state of the benzene molecule.

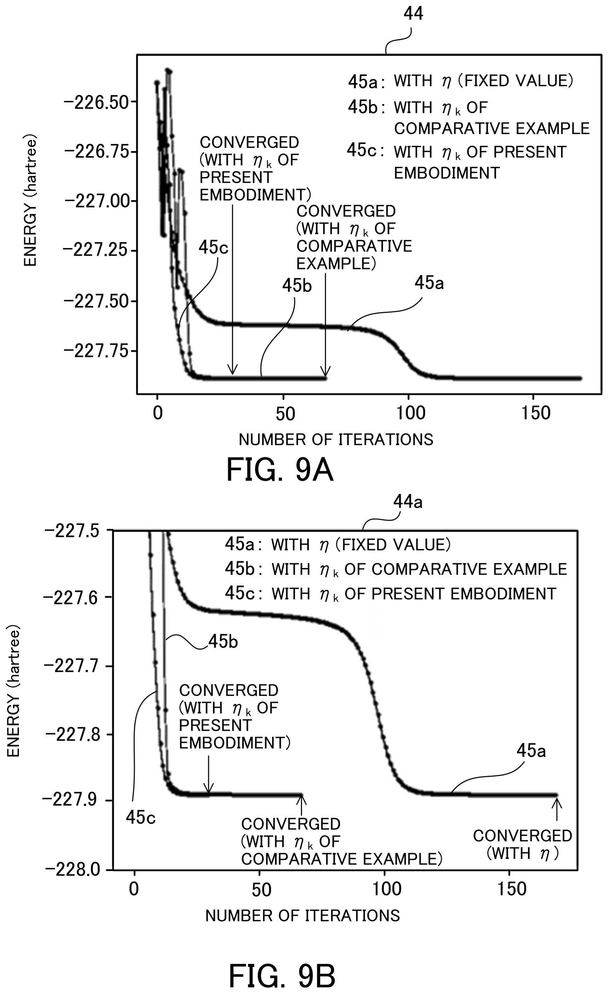

FIGS. 9A and 9B illustrate examples of the VQE computation for the energy of a benzene molecule. In FIG. 9A, a graph 44 represents the result of computing the energy of the benzene molecule using VQE. In FIG. 9B a graph 44a is an enlarged view of the graph 44, in which the energy is in the range of -228.0 to -227.5 hartree. The carbon-carbon bond distance of the benzene molecule is 1.39 Å, and the carbon-hydrogen bond distance is 1.07 Å. In the graphs 44 and 44a, the horizontal axis represents the number of iterations of the optimization process, and the vertical axis represents the energy (unit: hartree).

A polygonal line 45a represents a change in the energy in the case where the step size η of a fixed value is applied. A polygonal line 45b represents a change in the energy in the case where the step size ηₖ of a comparative example is applied. A polygonal line 45c represents a change in the energy in the case where the step size ηₖ of the present embodiment is applied.

In the computation examples of FIGS. 9A and 9B, the values of the parameter m in Equations (2) and (3) are set to 3.0. The fixed value of the step size η and the initial values of the step size ηₖ in the comparative example and the present embodiment are all set to the reference value η₀.

In the case where the step size η of the fixed value is used, the energy first decreases greatly, and after a period during which the energy remains almost unchanged, the energy further decreases greatly and converges, as represented by the polygonal line 45a. During the period in which the energy remains almost unchanged, the energy is trapped in a valley (a local minimum) of the energy potential that is higher than the global minimum.

In the case where the step size ηₖ of the comparative example is applied, the energy repeatedly increases and decreases with a large amount of change in the initial stage, and then greatly decreases and converges, as represented by the polygonal line 45b. In the example of FIGS. 9A and 9B, the number of iterations until the convergence condition is satisfied is 170 in the case where the step size η is applied, whereas the number of iterations until the convergence condition is satisfied is 68 in the case where the step size ηₖ of the comparative example is applied. That is, applying the step size ηₖ of the comparative example reduces the computation time by a reduction rate of 60% compared to applying the step size η.

In the case where the step size ηₖ of the present embodiment is applied, the energy repeatedly increases and decreases with a large amount of change during a period shorter than that in the case where the step size ηₖ of the comparative example is applied in the initial stage, and then greatly decreases and converges, as represented by the polygonal line 45c. In the example of FIGS. 9A and 9B, the number of iterations until the convergence condition is satisfied is 30 in the case where the step size ηₖ of the present embodiment is applied. That is, applying the step size ηₖ of the present embodiment reduces the computation time by a reduction rate of 82% compared to applying the step size η. Applying the step size ηₖ of the present embodiment reduces the computation time by a reduction rate of approximately 22% compared to applying the step size ηₖ of the comparative example.

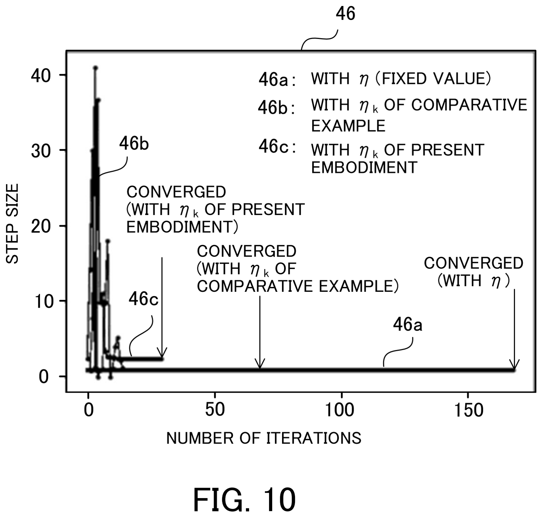

FIG. 10 illustrates an example of how the step size changes during the VQE computation for the energy of the benzene molecule. In a graph 46 illustrated in FIG. 10, the horizontal axis represents the number of iterations of the optimization process, and the vertical axis represents the value of the step size. A straight line 46a indicates the step size η of the fixed value. A polygonal line 46b indicates a change in the step size ηₛ of the comparative example. A polygonal line 46c indicates a change in the step size nₛ of the present embodiment.

As represented by the polygonal line 46b, in the initial stage where the optimization has not progressed (i.e., the number of iterations is small), the step size ηₖ of the comparative example repeatedly increases and decreases with a large amount of change. As the optimization progresses, the value of the step size ηₖ of the comparative example becomes substantially equal to the value of the fixed step size η.

The value (polygonal line 46c) of the step size ηₖ of the present embodiment greatly changes in the initial stage, and then changes with a smaller amount of change than the step size ηₖ of the comparative example. The value of the step size ηₖ of the present embodiment converges earlier than the value of the step size ηₖ of the comparative example.

As described above, in each step of the optimization of the set of parameters θ in the VQE computation, the step size ηₖ, which is the sum of the constant term and the variable term expressed using the ratio between f(θ_{i,k}) and f(θ_{i,k-1}), is used. This accelerates the convergence of the energy, and reduces the number of iterations of the optimization. As a result, the computation time needed for the optimization is also reduced. Compared to the case of using the step size η of the fixed value, the number of iterations until energy convergence is reduced by approximately 68% for the hydrogen molecule and by approximately 82% for the benzene molecule, and the computation time for the optimization is also reduced by a similar extent.

It is highly beneficial in the field of quantum chemical calculations to achieve such a reduction in the computation time at least for these molecules.

In the above example, the predetermined constant value C in Equation (2) that defines the step size ηₖ is set to 1. However, the constant value C is not limited to 1. For example, the constant value C may be set to a value greater than 1. In this case, the contribution of the constant term to the step size ηₖ increases compared to the case where C = 1. Alternatively, the constant value C may be set to a value less than 1. In this case, the contribution of the constant term to the step size ηₖ decreases compared to the case where C = 1. Thus, depending on the quantum many-body system to be solved, setting the constant value C to a value other than 1 may allow the optimization to progress along an optimization path toward lower energy at an earlier stage than in the case where C = 1, thereby accelerating the energy convergence.

### (Modification)

Each time the quantum computation management unit 110 determines that the value of the cost function f(θ) has converged, the quantum computation management unit 110 may change the reference value η₀ of the step size ηₖ and repeat the update process. This makes it possible to further reduce the number of iterations of the optimization. This is because making the reference value η₀ variable increases the degree of freedom in changing the step size ηₖ.

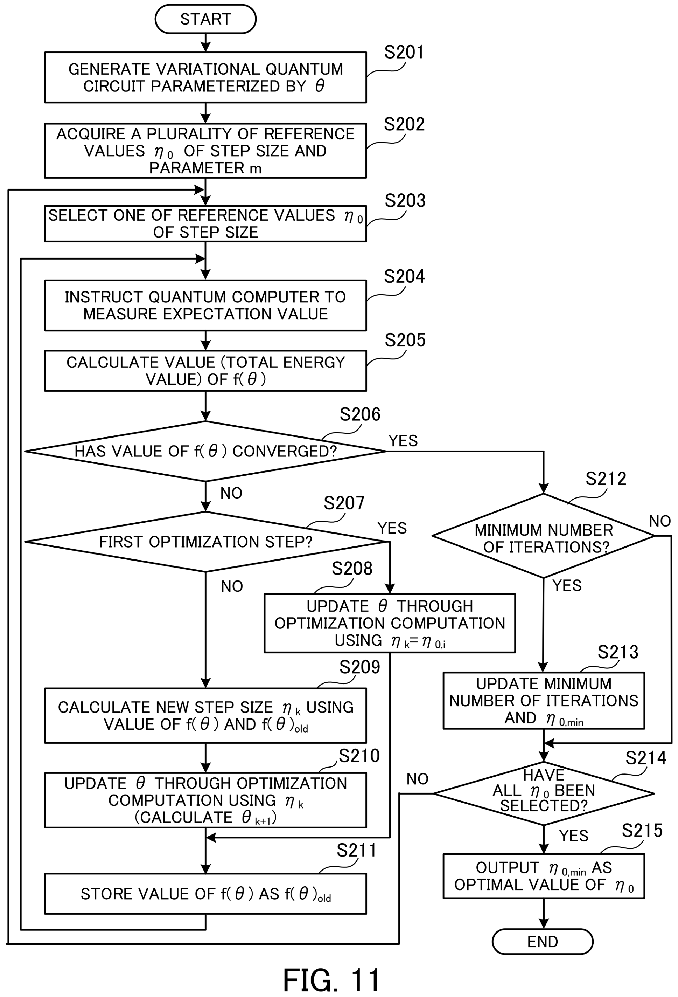

FIG. 11 is a flowchart illustrating an example procedure for a VQE computation process including a process of changing the reference value η₀.

Step S201 is the same as step S101 of FIG. 6.

[Step S202] The quantum computation management unit 110 acquires a reference value η₀, which is the initial value of the step size ηₛ used in parameter optimization. In this modification, the quantum computation management unit 110 acquires a plurality of reference values η₀ different from one another. The quantum computation management unit 110 also acquires the value of the parameter m, which is the exponent in Equation (2). For example, the quantum computation management unit 110 receives user input specifying the plurality of reference values η₀ and the value of the parameter m. The quantum computation management unit 110 transmits the value of the parameter m to the optimization computation unit 120. The optimization computation unit 120 stores the received value of the parameter m.

[Step S203] The quantum computation management unit 110 selects one of the plurality of reference values η₀. Each time step S203 is executed, one of the unselected reference values η₀ is selected. The quantum computation management unit 110 selects an unselected reference value η₀ in ascending or descending order, for example. The quantum computation management unit 110 transmits the selected reference value η₀ to the optimization computation unit 120. The optimization computation unit 120 stores the received reference value η₀.

Steps S204 to S211 are substantially the same as steps S103 to S110 of FIG. 6. However, in steps S208 and S209, the reference value η₀ selected in step S203 is used. In step S206, if the quantum computation management unit 110 determines that the value of the cost function f(θ) has converged, the quantum computation management unit 110 executes the following step S212.

[Step S212] The quantum computation management unit 110 determines whether the number of iterations until the value of the cost function f(θ) is determined to have converged is the minimum among the numbers of iterations obtained using the reference values η₀ selected so far in the optimization process. If the quantum computation management unit 110 determines that the number of iterations is the minimum, the process proceeds to step S213. If the quantum computation management unit 110 determines that the number of iterations is not the minimum, the process proceeds to step S214.

[Step S213] The quantum computation management unit 110 updates the minimum number of iterations and a reference value η_{0,min} that is the reference value η₀ applied when the minimum number of iterations is obtained, to the number of iterations obtained this time and the reference value η₀ applied this time. The minimum number of iterations and η_{0,min} are stored in, for example, the memory 102.

[Step S214] The quantum computation management unit 110 determines whether all reference values η₀ have been selected. The quantum computation management unit 110 determines that all the reference values η₀ have been selected, if all the plurality of acquired reference values η₀ have been selected by iteratively executing step S203.

If the quantum computation management unit 110 determines that all the reference values η₀ have been selected, the process proceeds to step S215. If the quantum computation management unit 110 determines that any reference value η₀ has not been selected, the process returns to step S203.

[Step S215] The quantum computation management unit 110 outputs η_{0,min} as an optimal value of the reference value η₀. In addition, the quantum computation management unit 110 outputs a solution corresponding to the quantum state obtained when the value of the cost function f(θ) has converged in the optimization process using η_{0,min}, and completes the VQE computation process.

As described above, the quantum computation management unit 110 changes the reference value η₀ each time the value of the cost function f(θ) is determined to have converged through the iterative execution of the update process, and searches for the reference value η₀ that minimizes the number of iterations of the update process. The procedure for the VQE computation process illustrated in FIG. 11 is merely an example, and the order of the processing steps may be changed as appropriate.

When an optimal value of the reference value η₀ for a certain molecule is obtained through the processing as described above, the optimal value may be used as a reference value for determining an optimal value of the reference value η₀ for another molecule. For example, if a molecule A and a molecule B are similar, the optimal values of the reference value η₀ for the molecule A and the molecule B may be the same. Alternatively, an optimal value of the reference value η₀ obtained for the molecule A may be used as the initial value for obtaining an optimal value of the reference value η₀ for the molecule B, which may make it easier to find the optimal value. This is because, in general, similar molecules have similar energy landscapes, and the optimal values of the reference value η₀ are expected to be the same or close to each other.

The foregoing merely illustrates the principles of the present disclosure. Further, many modifications and variations are possible for those skilled in the art, and the present disclosure is not limited to the exact construction and application examples shown and described above, and all such modifications and equivalents are deemed to be within the scope of the present disclosure as defined by the appended claims and their equivalents.

According to one aspect, the computation time for variational quantum eigenvalue computation is reduced.

## Claims

1. A computer program that causes a computer to perform, a plurality of times, an update process of updating a value of a first parameter, the first parameter being a variable included in a cost function applied to a variational quantum circuit (1) used for variational quantum eigenvalue computation, the computer program causing the computer to perform a process comprising:
determining a value of a second parameter, the second parameter representing a weight for an amount of change in the value of the first parameter in each execution of the update process, by adding a variable term and a constant term, the variable term being expressed using a ratio between a value of the cost function calculated through the variational quantum eigenvalue computation using the value of the first parameter obtained in a k-th execution of the update process and a value of the cost function calculated through the variational quantum eigenvalue computation using the value of the first parameter obtained in a (k-1)-th execution of the update process, k being a natural number; and
performing a (k+1)-th execution of the update process using the amount of change weighted by the determined value of the second parameter.

2. The computer program according to claim 1, wherein the (k+1)-th execution of the update process includes calculating a value by subtracting, from the value of the first parameter obtained in the k-th execution of the update process, a product of the value of the second parameter determined in the determining of the value of the second parameter and a partial differential coefficient representing a gradient of the cost function with respect to a change in the value of the first parameter, and setting the calculated value as an updated value of the first parameter.

3. The computer program according to claim 1 or claim 2, wherein
the variable term is a product of a power of an absolute value of the ratio and a reference value of the second parameter, and
the constant term is a product of the reference value and a predetermined constant value.

4. The computer program according to claim 3, wherein the process further includes
changing the reference value each time it is determined that the value of the cost function has converged through iterative execution of the update process, and
searching for the reference value that minimizes a number of iterations of the update process.

5. The computer program according to claim 3 or claim 4, wherein the predetermined constant value is 1.

6. An information processing method executed by a computer to perform, a plurality of times, an update process of updating a value of a first parameter, the first parameter being a variable included in a cost function applied to a variational quantum circuit (1) used for variational quantum eigenvalue computation, the information processing method comprising:
determining a value of a second parameter, the second parameter representing a weight for an amount of change in the value of the first parameter in each execution of the update process, by adding a variable term and a constant term, the variable term being expressed using a ratio between a value of the cost function calculated through the variational quantum eigenvalue computation using the value of the first parameter obtained in a k-th execution of the update process and a value of the cost function calculated through the variational quantum eigenvalue computation using the value of the first parameter obtained in a (k-1)-th execution of the update process, k being a natural number; and
performing a (k+1)-th execution of the update process using the amount of change weighted by the determined value of the second parameter.

7. An information processing apparatus for performing, a plurality of times, an update process of updating a value of a first parameter, the first parameter being a variable included in a cost function applied to a variational quantum circuit (1) used for variational quantum eigenvalue computation, the information processing apparatus comprising:
processing means (12) for:
determining a value of a second parameter, the second parameter representing a weight for an amount of change in the value of the first parameter in each execution of the update process, by adding a variable term and a constant term, the variable term being expressed using a ratio between a value of the cost function calculated through the variational quantum eigenvalue computation using the value of the first parameter obtained in a k-th execution of the update process and a value of the cost function calculated through the variational quantum eigenvalue computation using the value of the first parameter obtained in a (k-1)-th execution of the update process, k being a natural number; and
performing a (k+1)-th execution of the update process using the amount of change weighted by the determined value of the second parameter.
